(19) Europäisches Patentamt
European Patent Office
Office européen des brevets

(11) **EP 3 649 874 A2**

(12) **EUROPEAN PATENT APPLICATION**
published in accordance with Art. 153(4) EPC

(43) Date of publication:
**13.05.2020 Bulletin 2020/20**

(51) Int Cl.:
**A23L 11/00** (2016.01)    **A23L 17/60** (2016.01)
**A23L 17/40** (2016.01)    **A23L 19/00** (2016.01)
**A23L 7/109** (2016.01)

(21) Application number: **18828890.6**

(22) Date of filing: **06.07.2018**

(86) International application number:
**PCT/KR2018/007726**

(87) International publication number:
**WO 2019/009680 (10.01.2019 Gazette 2019/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.07.2017 KR 20170086549**

(71) Applicant: **CJ Cheiljedang Corporation**
**Seoul 04560 (KR)**

(72) Inventors:
• **KIM, Yeo Jin**
**Seoul 04718 (KR)**
• **BAE, Su Jin**
**Suwon-si**
**Gyeonggi-do 16508 (KR)**
• **PARK, Hong Wook**
**Seoul 06219 (KR)**
• **CHUNG, Woo Kyung**
**Suwon-si**
**Gyeonggi-do 16543 (KR)**

(74) Representative: **Cabinet Laurent & Charras**
**Le Contemporain**
**50 Chemin de la Bruyère**
**69574 Dardilly Cedex (FR)**

(54) **PROCESSED BEAN CURD CONTAINING RAW MATERIALS OTHER THAN SOYBEANS AND MANUFACTURING METHOD THEREFOR**

(57)    The present application relates to processed tofu comprising: one or more raw materials selected from the group consisting of seafood, vegetables, and noodles; tofu; soybean milk; salt, and to a manufacturing method therefor.

[FIG. 1]

MIXING OF BEAN CURD+SOYBEAN
MILK+NON-SOYBEAN RAW MATERIAL(S)

↓

COAGULATION

↓

PROCESSED BEAN CURD CONTAINING
NON-SOYBEAN RAW MATERIAL(S)

EP 3 649 874 A2

**Description**

[Technical Field]

The present application relates to processed tofu containing a non-soybean raw material and a method of producing the processed tofu.

[Background Art]

Generally, tofu is produced by soaking soybeans in water, grinding, heating, and filtering the resultant to separate soybean milk from tofu residue, and coagulating the soybean milk by adding a coagulant thereto.

Since such tofu is made from soybeans alone, it contains almost no other nutrients besides the soybean nutrients, and since it has no other flavors besides those derived from the soybeans, it does not come in various tastes and flavors.

Therefore, attempts have been made to produce tofu by adding various non-soybean raw materials to satisfy consumer preferences, but there has been a problem that when raw materials are added to the soybean milk, the raw materials either sink to the bottom or float to the top in the soybean milk and thus become highly concentrated on one side rather than being uniformly dispersed therethroughout.

Under this background, the present inventors made diligent research efforts to develop a method capable of uniformly dispersing non-soybean raw materials in the production of processed tofu. As a result, the present inventors have found that when the viscosity of the soybean milk is adjusted by mixing with tofu at a certain mixing ratio, the raw materials are uniformly mixed with the soybean milk and remain dispersed even after coagulation, and thereby completed the present application.

[Patent Documents]

    (Patent Document 1) KR10-1998-0087687A (December 05, 1998)
    (Patent Document 2) KR10-2012-0043869A (May 07, 2012)

[Disclosure]

[Technical Problem]

One aspect of the present application is directed to providing processed tofu, which contains: one or more raw materials selected from the group consisting of seafood, vegetables, and noodles; tofu; soybean milk; and salt.

Another aspect of the present application is directed to providing a method of producing processed tofu, which includes the steps of: (a) mixing, with tofu, soybean milk, and salt, one or more raw materials selected from the group consisting of seafood, vegetables, and noodles; (b) grinding the resultant of the step (a); and (c) adding a coagulant to the resultant of the step (b).

[Technical Solution]

Hereinafter, the present application will be described in detail. Meanwhile, the descriptions and embodiments of one aspect of the present application may also be applied to the descriptions and embodiments of other aspects of the present application about common matter. In addition, all combinations of the various elements disclosed in the present application are encompassed in the scope of the present application. In addition, the scope of the present application is not to be limited by the specific descriptions provided below.

To achieve the objectives of the present application, one aspect of the present application provides processed tofu, which contains: one or more raw materials selected from the group consisting of seafood, vegetables, and noodles; tofu; soybean milk; and salt.

According to one embodiment of the present application, the weight ratio of the soybean milk and the tofu of the present application may be 7.5:2.5 to 5.5:4.5 and specifically 7:3 to 6:4.

According to another embodiment of the present application, the soybean milk of the present application may be used in an amount of 55 to 75 parts by weight, 60 to 70 parts by weight, 55 to 70 parts by weight, 55 to 65 parts by weight, 60 to 75 parts by weight, or 65 to 75 parts by weight based on 100 parts by weight of the processed tofu.

According to still another embodiment of the present application, the soybean milk of the present application may have a dry solid content of 5 to 15 brix% or 8 to 12 brix%.

According to yet another embodiment of the present application, the tofu of the present application may be used in an amount of 25 to 45 parts by weight, 30 to 40 parts by weight, 25 to 40 parts by weight, 25 to 35 parts by weight, 30 to 45 parts by weight, or 35 to 45 parts by weight based on 100 parts by weight of the processed tofu.

According to yet another embodiment of the present application, the salt of the present application may be used in an amount of 0.1 to 1 part by weight or 0.3 to 0.7 part by weight based on 100 parts by weight of the processed tofu.

According to yet another embodiment of the present application, the raw material of the present application may be used in an amount of 0.1 to 20 parts by weight, 0.1 to 15 parts by weight, 0.1 to 10 parts by weight, 0.5 to 20 parts by weight, or 0.5 to 15 parts by weight based on 100 parts by weight of the processed tofu.

According to yet another embodiment of the present application, the seafood of the present application may be laver or shrimp. Specifically, the seafood of the present application may be laver, and more specifically, the laver of the present application may be used in an amount of 0.1 to 1 part by weight or 0.4 to 0.8 part by weight based on 100 parts by weight of the processed tofu. In addition, the seafood of the present application may be shrimp, and more specifically, the shrimp of the present application may be used in an amount of 0.5 to 5 parts by weight or 1 to 3 parts by weight based on 100 parts by weight of the processed tofu.

According to yet another embodiment of the present application, the vegetable of the present application may be chili pepper or coriander. Specifically, the vegetable of the present application may be chili pepper, and more specifically, the chili pepper of the present application may be used in an amount of 1 to 15 parts by weight, 5 to 10 parts by weight, 1 to 10 parts by weight, or 5 to 15 parts by weight based on 100 parts by weight of the processed tofu.

According to yet another embodiment of the present application, the noodles of the present application may be cellophane noodles. Specifically, the noodles of the present application may be cellophane noodles, and more specifically, the noodles of the present application may be used in an amount of 1 to 7 parts by weight or 3 to 5 parts by weight based on 100 parts by weight of the processed tofu.

According to yet another embodiment of the present application, the processed tofu of the present application may further contain a coagulant. Specifically, the coagulant of the present application may be one or more selected from the group consisting of calcium sulfate, magnesium chloride, and glucono $\delta$-lactone. In addition, the coagulant of the present application may be used in an amount of 0.1 to 1 part by weight based on 100 parts by weight of the soybean milk of the present application.

According to yet another embodiment of the present application, the processed tofu of the present application may be fried tofu.

According to yet another embodiment of the present application, the tofu of the present application may have a hardness of 1,000 to 1,500 g or 1,200 to 1,400 g.

According to yet another embodiment of the present application, the tofu of the present application may have an adhesiveness of 0.1 to 5 g.s, 0.5 to 3 g.s, or 0.5 to 2 g.s.

According to yet another embodiment of the present application, the tofu of the present application may have a springiness of 500 to 1,000 J or 700 to 900 J.

Another aspect of the present application provides a method of producing processed tofu, which includes the steps of: (a) mixing, with tofu, soybean milk, and salt, one or more raw materials selected from the group consisting of seafood, vegetables, and noodles; (b) grinding the resultant of the step (a); and (c) adding a coagulant to the resultant of the step (b).

According to one embodiment of the present application, the grinding of the step (b) of the present application may be the grinding of the tofu in the resultant of the step (a) to a particle size of 0.5 to 2 mm.

According to one embodiment of the present application, the resultant of the step (a) or the resultant of the step (b) of the present application may have a viscosity of 20 to 70 cP, 20 to 60 cP, 30 to 70 cP, 30 to 60 cP, 45 to 70 cP, 40 to 60 cP, or 20 to 45 cP. In the present application, the viscosity may be determined by the mixing ratio of the tofu and the soybean milk, but may not be affected by the raw material and the salt added in the step (a).

[Advantageous Effects]

Since the tofu of the present application is produced by mixing soybean milk and tofu at a specific ratio so that the non-soybean raw material can be uniformly dispersed throughout the tofu, there is an advantage that a tofu product having the taste, flavor, and texture of the raw material in every part thereof can be provided.

[Description of Drawings]

FIG. 1 is a flow chart illustrating a method of producing tofu of the present application.

FIG. 2 is an image showing the degree of raw material dispersion according to the mixing ratio of soybean milk and tofu in Example 1.

FIG. 3 is an image of processed tofu final products according to one embodiment of the present application, which contain laver.

[Modes of the Invention]

Hereinafter, the present application will be described in more detail with reference to Examples. However, the Examples are merely illustrative of the present application, and are not to limit the scope of the present application thereto.

**Example 1: Production of processed tofu and evaluation of degree of raw material dispersion**

1-1. Preparation of tofu for use as raw material of processed tofu

One hundred kilograms of soybeans were soaked in 500 kg of water. The soaked soybeans were ground, passed through a filter, and then steamed to prepare soybean milk. Subsequently, after dispersing calcium sulfate in water that is five times the weight thereof, the calcium sulfate was added to the prepared soybean milk in an amount of 0.3% by weight relative to the soybean milk to coagulate the same, and thereby tofu was prepared.

1-2. Production of processed tofu containing non-soybean raw material(s) (Raw material(s) other than soybeans)

A liquid mixture was prepared by mixing the tofu prepared in Example 1-1, the soybean milk prepared while preparing the tofu in Example 1-1, refined salt, and non-soybean raw material(s) (laver; cellophane noodles, chili pepper, and dried shrimp; or chili pepper and coriander) according to a mixing ratio shown in Table 1 to Table 3, and was ground using a homogenizer (Ingenieurburo Mencke & Tegtmeyer GmbH) until the particle size of the tofu therein became 2 mm or less. After the grinding, the liquid mixture was coagulated by mixing it with calcium sulfate, which was dispersed in water five times the weight thereof, in an amount of 0.3% by weight relative to the soybean milk and performing stirring, and the resultant was placed in a molding box and pressed for 20 minutes to produce tofu. The produced tofu was cut into a size of 110 mm×75 mm×35 mm and then fried in a 170 °C cooking oil (a blended cooking oil of oleic oil and soybean oil, Dauan MARVELA (Sime Darby Plantation Berhad)) for one minute.

1-3. Evaluation of degree of raw material dispersion

The degree of raw material dispersion in the tofu according to the mixing ratio of soybean milk and tofu was evaluated. First, each of the liquid mixtures prepared by adding laver as a raw material in Example 1-2 was placed in a transparent container to visually evaluate the degree of laver dispersion in the liquid mixture (for Experimental Examples 1-1 to 1-5). In addition, each of the fried tofu obtained in Example 1-2 was visually examined to evaluate the degree of raw material dispersion in the tofu (for Experimental Examples 1-1 to 1-6, 2-1 to 2-5, and 3-1 to 3-5).

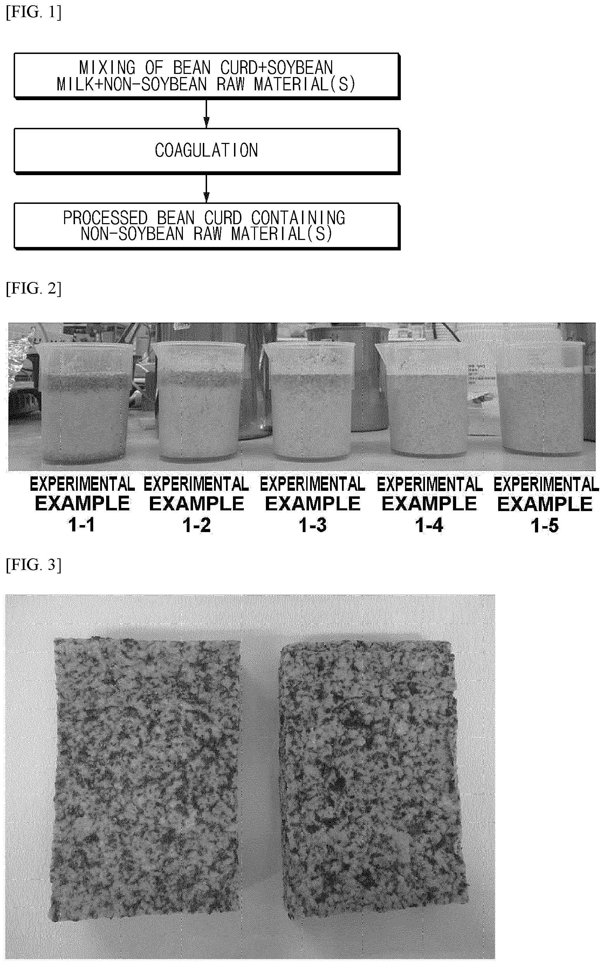

As a result, it was found that in the case of the liquid mixture containing laver, the laver was uniformly dispersed, without floating to the top or sinking to the bottom, throughout the liquid mixture when soybean milk and tofu had been mixed in a ratio of 7:3 or 6:4 (FIG. 2). Likewise, in the case of the fried tofu, it was found that the non-soybean raw material(s) was/were uniformly dispersed throughout tofu when soybean milk and tofu had been in a ratio of 7:3 to 5:5, regardless of the type(s) of the raw material(s) (Table 1 to Table 3, and FIG. 3).

[Table 1]

| Tofu containing added laver | | | | | | |
|---|---|---|---|---|---|---|
| | Experimental Example 1-1 | Experimental Example 1-2 | Experimental Example 1-3 | Experimental Example 1-4 | Experimental Example 1-5 | Experimental Example 1-6 |
| 10 Brix% soybean milk (kg) | 100 | 90 | 80 | 70 | 60 | 50 |
| Tofu (kg) | 0 | 10 | 20 | 30 | 40 | 50 |
| Refined salt (g) | 330 | 330 | 330 | 330 | 330 | 330 |

(continued)

| Tofu containing added laver | | | | | | |
|---|---|---|---|---|---|---|
|  | Experimental Example 1-1 | Experimental Example 1-2 | Experimental Example 1-3 | Experimental Example 1-4 | Experimental Example 1-5 | Experimental Example 1-6 |
| Sliced laver (195 mm×215 mm, g) | 600 | 600 | 600 | 600 | 600 | 600 |
| Degree of laver dispersion | Floated or sank | Floated or sank | Floated or sank | Uniformly dispersed | Uniformly dispersed | Uniformly dispersed |

[Table 2]

| Tofu containing added cellophane noodles, chili pepper, and dried shrimp | | | | | |
|---|---|---|---|---|---|
|  | Experimental Example 2-1 | Experimental Example 2-2 | Experimental Example 2-3 | Experimental Example 2-4 | Experimental Example 2-5 |
| 10 Brix% soybean milk (kg) | 100 | 90 | 80 | 70 | 60 |
| Tofu (kg) | 0 | 10 | 20 | 30 | 40 |
| Refined salt (g) | 270 | 270 | 270 | 270 | 270 |
| Cellophane noodles (kg) | 4 | 4 | 4 | 4 | 4 |
| Chili pepper (kg) | 9 | 9 | 9 | 9 | 9 |
| Dried shrimp (kg) | 2 | 2 | 2 | 2 | 2 |
| Degree of cellophane noodle, chili pepper, and dried shrimp dispersion | Floated or sank | Floated or sank | Floated or sank | Uniformly dispersed | Uniformly dispersed |

[Table 3]

| Tofu containing added chili pepper and coriander | | | | | |
|---|---|---|---|---|---|
|  | Experimental Example 3-1 | Experimental Example 3-2 | Experimental Example 3-3 | Experimental Example 3-4 | Experimental Example 3-5 |
| 10 Brix% soybean milk (kg) | 100 | 90 | 80 | 70 | 60 |
| Tofu (kg) | 0 | 10 | 20 | 30 | 40 |
| Refined salt (g) | 400 | 400 | 400 | 400 | 400 |
| chili pepper (kg) | 6 | 6 | 6 | 6 | 6 |
| Coriander (kg) | 3 | 3 | 3 | 3 | 3 |
| Degree of chili pepper and coriander dispersion | Floated or sank | Floated or sank | Floated or sank | Uniformly dispersed | Uniformly dispersed |

**Example 2: Evaluation of viscosity of liquid mixture according to mixing ratio of soybean milk and tofu**

Since it had been confirmed in Example 1 that the degree of non-soybean raw material dispersion varied according to the mixing ratio of soybean milk and tofu, the viscosity according to the mixing ratio of soybean milk and tofu was evaluated.

The viscosity of each liquid mixture prepared by mixing soybean milk and tofu in Example 1-2 according to a mixing ratio shown in Table 4 was measured, by using a DV3T Brookfield rheometer (AMETEK, Inc.) with a LV-61 spindle at a rotation speed of 100 rpm and a temperature of 25 °C.

As a result, it was found that the mixing of soybean milk and tofu at a ratio of 10:0 to 8:2 yielded a liquid mixture with a viscosity of 10 to 17 cP and that the mixing of soybean milk and tofu at a ratio of 7:3 or 6:4 yielded a liquid mixture of the soybean milk and the tofu with a viscosity of 30 to 60 cP. When the ratio of soybean milk and tofu was 5:5, the viscosity was too high to be measured. Therefore, it can be seen that the non-soybean raw material(s) is/are most uniformly dispersed in a liquid mixture having a viscosity of 30 to 60 cP.

[Table 4]

| Viscosity of liquid mixture according to mixing ratio of soybean milk and tofu | | | | | | |
|---|---|---|---|---|---|---|
| Soybean milk:tofu ratio | 10:0 | 9:1 | 8:2 | 7:3 | 6:4 | 5:5 |
| Weight of soybean milk (kg) | 100 | 90 | 80 | 70 | 60 | 50 |
| Weight of tofu (kg) | 0 | 10 | 20 | 30 | 40 | 50 |
| Viscosity (cP) | 10.22 | 11.87 | 16.24 | 30.06 | 59.74 | N/A |

**Example 3: Measurement of physical properties and solid content of tofu**

The physical properties and solid content of Experimental Example 1-4 prepared in Example 1-2 were measured. To evaluate the physical properties, hardness, adhesiveness, and springiness were measured using a TA.XT Plus texture analyzer (Stable Micro Systems) under the following measurement conditions.

<Physical property measurement conditions>

The conditions were set as follows:

Probe: a cylindrical probe 2 cm in diameter;
Speed at which the probe descends to a sample (i.e., Pre-test Speed): 5.00 mm/sec;
Speed at which the probe penetrates into the sample after touching the sample surface (i.e., Test Speed): 5.00 mm/sec;
Speed at which the probe returns to its initial position after penetrating the sample (i.e., Post-test Speed): 5.00 mm/sec;
Target mode of the probe (i.e., Target Mode): Distance;
Distance by which the probe penetrates into the sample after recognizing the sample surface (i.e., Distance): 5.000 mm;
Conditions for the probe to recognize the sample (i.e., Trigger Type): Force; and
Minimal force for the probe to recognize the presence of the sample (i.e., Trigger Force): 10.0 g.

Table 5 shows the result of measuring physical properties, where the average of a total of five measurements made under the same conditions is presented as the result.

[Table 5]

| Result of evaluating physical properties of Experimental Example 1-4 | | | |
|---|---|---|---|
| Test item | Hardness (g) | Adhesiveness (g·s) | Springiness (J) |
| Measured value | 1274.49 | 1.00 | 772.85 |

The solid content was determined according to the following equation after grinding Experimental Example 1-4 and then drying the same in a dry oven at 110 °C for six hours. This test was repeated a total of five times, and the average of the measurements is presented as the result.

$$\text{Solid content } (\%) = \frac{(\text{Weight of dried sample and weighing plate} - \text{Weight of empty weighing plate})}{(\text{Weight of undried sample and weighing plate} - \text{Weight of empty weighing plate})} \times 100$$

According to the equation, the measured solid content was 27.55% by weight.

**Example 4: Sensory evaluation**

Experimental Examples 1-4, 2-4, and 3-4 prepared in Example 1-2 were subjected to sensory evaluation (Table 6 to Table 8). As a Comparative Example, fried plain tofu not containing any of the non-soybean raw materials (laver; cellophane noodles, chili pepper, and dried shrimp; or chili pepper and coriander) was prepared according to the preparation method of Example 1, and was also subjected to sensory evaluation (Table 9).

Specifically, the sensory evaluation was performed by 32 panelists, who were asked to evaluate each of the tofu according to overall preference, appearance, texture, taste preference for each of the raw materials, and taste preference for the soybean.

As a result, Experimental Examples 1-4, 2-4, and 3-4, which were given a score of 4.19 or more, 3.20 or more, and 3.15 or more, respectively, were evaluated as having acceptable sensory quality as indicated by the score of 3 or more, and were also given a high score in terms of the taste preference for each of the raw materials. On the other hand, the fried plain tofu (Comparative Example) was given a lower score than Experimental Examples 1-4, 2-4, and 3-4 in terms of overall preference and the taste preference for the soybean. Therefore, it was confirmed that when a non-soybean raw material(s) was/were added in the production of the tofu, the taste preference for the soybean of the fried tofu and, further, the overall preference for the fried tofu were improved.

[Table 6]

| Sensory evaluation result of Experimental Example 1-4 | | | | |
|---|---|---|---|---|
| Classification | Overall preference | Appearance | Texture | Taste preference for laver | Taste preference for soybean |
| Score | 4.56 | 4.41 | 4.38 | 4.19 | 4.63 |

[Table 7]

| Sensory evaluation result of Experimental Example 2-4 | | | | |
|---|---|---|---|---|
| Classification | Overall preference | Appearance | Texture | Taste preference for shrimp | Taste preference for soybean |
| Score | 3.65 | 3.20 | 3.69 | 3.81 | 3.50 |

[Table 8]

| Sensory evaluation result of Experimental Example 3-4 | | | | |
|---|---|---|---|---|
| Classification | Overall preference | Appearance | Texture | Taste preference for coriander | Taste preference for soybean |
| Score | 3.31 | 3.46 | 3.27 | 3.23 | 3.15 |

[Table 9]

| Sensory evaluation result of fried plain tofu (Comparative Example) | | | |
|---|---|---|---|
| Classification | Overall preference | Softness preference | Taste preference for soybean |
| Score | 3.21 | 2.63 | 3.11 |

**Claims**

1. Processed tofu comprising:

   one or more raw material(s) selected from the group consisting of seafood, vegetables, and noodles;
   tofu;
   soybean milk; and
   salt.

2. The processed tofu of claim 1, wherein the weight ratio of the soybean milk and the tofu is 7.5:2.5 to 5.5:4.5.

3. The processed tofu of claim 1, wherein the soybean milk is included in an amount of 55 parts by weight to 75 parts by weight based on 100 parts by weight of the processed tofu.

4. The processed tofu of claim 1, wherein the soybean milk has a dry solid content of 5 brix% to 15 brix%.

5. The processed tofu of claim 1, wherein the tofu is included in an amount of 25 parts by weight to 45 parts by weight based on 100 parts by weight of the processed tofu.

6. The processed tofu of claim 1, wherein the salt is included in an amount of 0.1 part by weight to 1 part by weight based on 100 parts by weight of the processed tofu.

7. The processed tofu of claim 1, wherein the raw material(s) is/are included in an amount of 0.1 part by weight to 20 parts by weight based on 100 parts by weight of the processed tofu.

8. The processed tofu of claim 1, wherein the seafood is laver or shrimp.

9. The processed tofu of claim 1, wherein the vegetable is chili pepper or coriander.

10. The processed tofu of claim 1, wherein the noodles are cellophane noodles.

11. The processed tofu of claim 1, which further contains a coagulant.

12. A method of producing the processed tofu of claim 11, wherein the coagulant is one or more selected from the group consisting of calcium sulfate, magnesium chloride, and glucono $\delta$-lactone.

13. The processed tofu of claim 1, which is fried tofu.

14. The processed tofu of claim 13, which has a hardness of 1,000 g to 1,500 g.

15. The processed tofu of claim 13, which has an adhesiveness of 0.1 g.s to 5 g.s.

16. The processed tofu of claim 13, which has a springiness of 500 J to 1,000 J.

17. A method of producing processed tofu, the method comprising:

    (a) mixing, with tofu, soybean milk, and salt, one or more raw material(s) selected from the group consisting of seafood, vegetables, and noodles;
    (b) grinding the resultant of (a); and
    (c) adding a coagulant to the resultant of (b).

18. The method of claim 17, wherein the grinding in (b) is grinding of the tofu contained in the resultant of (a) to a particle size of 0.5 mm to 2 mm.

19. The method of claim 17, wherein the resultant of (a) or the resultant of (b) has a viscosity of 20 cP to 70 cP.

[FIG. 1]

```
┌─────────────────────────────────────────┐
│   MIXING OF BEAN CURD+SOYBEAN            │
│   MILK+NON-SOYBEAN RAW MATERIAL(S)       │
└─────────────────────────────────────────┘
                    │
                    ▼
┌─────────────────────────────────────────┐
│              COAGULATION                 │
└─────────────────────────────────────────┘
                    │
                    ▼
┌─────────────────────────────────────────┐
│   PROCESSED BEAN CURD CONTAINING         │
│   NON-SOYBEAN RAW MATERIAL(S)            │
└─────────────────────────────────────────┘
```

[FIG. 2]

| EXPERIMENTAL EXAMPLE 1-1 | EXPERIMENTAL EXAMPLE 1-2 | EXPERIMENTAL EXAMPLE 1-3 | EXPERIMENTAL EXAMPLE 1-4 | EXPERIMENTAL EXAMPLE 1-5 |

[FIG. 3]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1019980087687 A

- KR 1020120043869 A